(19) Europäisches Patentamt

European Patent Office

Office européen des brevets

(11) EP 1 724 624 A1

(12) **EUROPEAN PATENT APPLICATION**
published in accordance with Art. 158(3) EPC

(43) Date of publication:
22.11.2006 Bulletin 2006/47

(51) Int Cl.:
*G02B 26/02* (2006.01)  *G02B 26/08* (2006.01)

(21) Application number: 04718719.0

(86) International application number:
**PCT/JP2004/003020**

(22) Date of filing: 09.03.2004

(87) International publication number:
**WO 2005/085929 (15.09.2005 Gazette 2005/37)**

(84) Designated Contracting States:
DE FR GB

(71) Applicant: FUJITSU LIMITED
Kawasaki-shi,
Kanagawa 211-8588 (JP)

(72) Inventor: AKIMOTO, Kazuaki,
c/o Fujitsu Network Techn. Ltd.
Yokohama-shi,
Kanagawa 2220033 (JP)

(74) Representative: HOFFMANN EITLE
Patent- und Rechtsanwälte
Arabellastrasse 4
81925 München (DE)

(54) **MIRROR DEVICE, OPTICAL CONTROLLER, CONTROL METHOD OF MIRROR AND MIRROR ELEMENT**

(57)    A low-priced mirror device that has a simple structure and high reliability and can prevent excessive light input.

A reflecting surface is constructed to be rotatable, and the mirror device is comprised of a mirror (13) whose reflecting surface is rotated by a radiation pressure of an incident light that is supplied and restoring force generating mechanisms (3a, 3b) that can generate a restoring force attempting to restore the mirror (13) that has been rotated by the radiation pressure of the incident light to an original position.

FIG. 2

**Description**

Technical Field

The present invention relates to a mirror device, an optical controller, a mirror control method, and a mirror element suitable in use for an optical transmission device in an optical communication field, light intensity measurement, and the like.

Background Art

Due to technological progress in recent years, optical output of optical devices is increasing with increased output of light sources such as a laser light and amplification by light amplifiers. For example, with an increase of wavelength numbers by wavelength multiplexing transmission in optical communication apparatuses and optical excitation used in Raman amplifiers, there are not a few optical communication apparatuses that output light in watt ranges.

Care must be taken, however, when making measurement of such large optical output using an optical measuring apparatus. This is because some optical measuring apparatuses may be damaged by excessive optical input. In such cases, preventive measures must be taken to prevent excessive optical input from taking place and an optical attenuator is normally inserted prior to optical input of the optical measuring apparatus to reduce optical input intensity to the optical measuring apparatus.

Also, optical transmission devices have optical components and functions whose capabilities may be impaired when excessive optical input takes place. Also in such cases, preventive measures must be taken to prevent excessive optical input from taking place. For an optical communication apparatus used in a trunk line system, a control device is normally provided in the optical communication apparatus to inhibit excessive optical input or optical output by monitoring optical input/output of the apparatus to have reliability secured.

As described above, as preventive measures to inhibit excessive optical input to optical devices, operators have had to pay attention to locations where excessive optical input/output could take place when constructing a measurement system or optical device, requiring a control device for monitoring and attenuating such optical input/output.

However, such conventional technologies have a problem that excessive optical input for optical devices cannot be avoided when optical input/output that has not been anticipated by the operator takes places or the operator lacks attention.

Moreover, when the control device is made to inhibit excessive optical input or optical output, the control device may have a complicated structure. Thus, as opposed to the optical communication apparatuses used for a trunk line system, the control apparatus becomes costly for small-scale or household optical communication apparatuses and is not realistic. Also, since the control device operates actively, when compared with a passive device, the structure of a backup unit in case of a failure or the like of the control device inevitably becomes complicated.

Therefore, a complicated and costly control device must be provided to inhibit excessive optical input or optical output, and such a control device is hardly applicable to small-scale and household optical devices.

A thermal lens is available as another conventional technology. This lens behaves like a lens using a dye solution whose index of refraction changes by absorbing incident light. Light intensity can be inhibited by using this thermal lens, but since the incident light is always absorbed, the light intensity always decreases, that is, a loss occurs. Also, since some wavelengths exist that cannot be used due to dependence of absorption features of dye on wavelength, all-purpose use of the thermal lens is not to be expected.

Incidentally, a technology described in Patent Document 1 is available as a publicly known technology related to the present invention, but the technology described in Patent Document 1 is intended to provide a device that can multiplex and demultiplex an optical signal simultaneously with a relatively simple structure and is not intended to realize a device that prevents optical input from becoming excessive with a simple structure.

Technologies described in Patent Documents 2 and 3 are also available as publicly known technologies related to the present invention, but these technologies are not intended to realize a device that prevents optical input from becoming excessive with a simple structure, either.

Moreover, though no detailed structure is disclosed, a technology described in Non-Patent Document 1 shown below is available as a technology related to the present invention.

The present invention has been made in view of the above problems and has an object to provide a mirror device, an optical controller, a mirror control method, and a mirror element that have a simple structure and are inexpensive, highly reliable, and enabled to prevent optical input from becoming excessive.

Another object of the present invention is to provide enabling realization of an optical switch function and an optical flip flop function with a simple structure and high reliability at low prices.

Patent Document 1

Japanese Patent Laid-Open (Kokai) No. HEI 7-202848
Patent Document 2
Japanese Patent Laid-Open (Kokai) No. 2000-146654
Patent Document 3
Japanese Patent Laid-Open (Kokai) No. 2002-87574
Non-Patent Document 1
Tom Marrapode et. al. "Fuse also for an optical transmission system for suppressing excessive power", Nikkei Electronics, Nikkei Business Publications Inc., issued on Nov. 24, 2003, PP. 145-148

Disclosure of the Invention

To achieve the above objects, a mirror device according to the present invention comprises a mirror whose reflecting surface is constructed to be rotatable and is rotated by a radiation pressure of an incident light that is supplied and a restoring force generating mechanism that can generate a restoring force attempting to restore the mirror that has been rotated by the radiation pressure of the incident light to an original position thereof.

At this time, the mirror device can be constructed so that the incident light that provides the radiation pressure to the mirror is a signal light.

The mirror device can also be constructed so that the incident light that provides the radiation pressure to the mirror is a control light and the signal light is caused to reflect at a rotation axis position on the reflecting surface of the mirror. In this case, the mirror device may be constructed so that the control light includes a first and a second control light incident on two locations sandwiching the rotation axis on the reflecting surface of the mirror respectively and a mirror position holding mechanism is provided to hold a mirror position even if neither the first nor the second control light is input.

In the above-described mirror device according to the present invention, the restoring force generatingmechanism may be equipped with a torsion bar to support the rotation axis of the mirror and constructed so that a torsion stress of the torsion bar should become the restoring force.

The restoring force generating mechanism may be comprisedof an electrostatic force providing mechanism that provides an electrostatic force, which becomes the restoring force, to the mirror. In this case, the electrostatic force providing mechanism is equipped with electrodes disposed insulated on a rear side of the reflecting surface of the mirror and can be constructed so that the restoring force should be generated by the electrostatic force provided to the mirror through a voltage applied to the electrodes.

Also in the above-described mirror device according to the present invention, the restoring force generating mechanism may be comprised of a magnetic force providing mechanism that provides a magnetic force, which becomes the restoring force, to the mirror, and in this case, the magnetic force providing mechanism is equipped with magnets disposed insulated on the rear side of the reflecting surface of the mirror and can be constructed so that the restoring force should be generated by the magnetic force obtained through the magnets.

Furthermore, in the above-described mirror device according to the present invention, the restoring force generating mechanism may be comprised of a surface tension providing mechanism that provides a surface tension, which becomes the restoring force, to the mirror.

An optical controller according to the present invention comprises an incident light optical system that inputs an incident light at a predetermined angle, a mirror device that reflects the incident light from the incident light optical system, and an output light optical system on which the incident light reflected by the mirror device is incident as an output light, wherein the mirror device comprises a mirror whose reflecting surface reflects the incident light supplied to the reflecting surface and is constructed to be rotatable, and a restoring force generating mechanism that generates the restoring force attempting to restore the mirror to an original position thereof against a force attempting to rotate the mirror, wherein the predetermined angle on the reflecting surface is formed by the restoring force generated by the restoring force generating mechanism and a coupling efficiency of the output light reflected by the mirror to the output optical system is controlled so that the predetermined angle is formed on the reflecting surface.

Also, an optical controller according to the present invention comprises an incident light optical system that inputs an incident light at a predetermined angle, a mirror device that reflects the incident light from the incident light optical system, an output light optical system on which the incident light reflected by the mirror device is incident as an output light, and a control light source that inputs a control light toward the mirror device, wherein the mirror device comprises the mirror whose reflecting surface reflects the incident light supplied to the reflecting surface and is constructed to be rotatable, and a restoring force generating mechanism that generates the restoring force attempting to restore the mirror to an original position thereof against a force attempting to rotate the mirror, wherein the input optical system is disposed so that the incident light is reflected on a rotation axis for the rotation in the mirror device, the predetermined angle on the reflecting surface is formed by the restoring force generated by the restoring force generating mechanism and the angle on the reflecting surface is controlled so that the coupling efficiency of the output light reflected by the mirror to the output optical system is reached.

The above-described optical controller preferably comprises a radiation pressure controller that controls the radiation pressure of the control light by controlling intensity of the control light.

In this case, the optical controller can be constructed so that the radiation pressure controller controls the control light intensity by a first or a second intensity, which are different from each other, the angle on the reflecting surface of the mirror is set to a first angle by a first radiation pressure by the control light controlled by the first intensity to turn on the coupling efficiency of the output light reflected by the mirror to the output optical system, and the angle on the reflecting surface of the mirror is set to a second angle by a second radiation pressure by the control light controlled by the second intensity to turn off the coupling efficiency of the output light reflected by the mirror to the output optical system.

Furthermore, the optical controller may be constructed so that the control light that provides the radiation pressure to the mirror includes a first and a second control light incident on two locations sandwiching the rotation axis on the reflecting surface of the mirror respectively, the mirror position holding mechanism is provided to hold the mirror position even if neither of the first nor second control light is input, and by controlling the radiation pressure by the first and second control light, the radiation pressure controller holds the mirror surface in a first state using the radiation pressure of any one of the first and second control light as a trigger, while holding the mirror surface in a second state using the radiation pressure of the other of the first and second control light as a trigger.

A mirror device according to the present invention comprises, in addition to the mirror whose reflecting surface is constructed to be rotatable and is rotated by the radiation pressure of the incident light that is supplied, means for generating a force to rotate the mirror independently of the mirror rotation by the incident light.

Furthermore, a control method of a mirror according to the present invention comprises rotating the mirror by a radiation pressure of the light incident on the mirror whose reflecting surface is constructed to be rotatable and rotating the mirror that has been rotated by the incident light to a predetermined position.

Also, a mirror element according to the present invention comprises a reflecting surface, a rotation axis to rotate the reflecting surface, and a supporter for supporting the rotation axis, wherein the rotation axis and the supporter are constructed to be rotatable by a radiation pressure of a light inputted on the reflecting surface.

As described above, according to the mirror device, optical controller, mirror control method, and mirror element of the present invention, effects or advantages shown below are expected:

(1) Since the mirror device is equipped with the mirror and restoring force generating mechanism, the device has advantages that incident light can change the coupling efficiency thereof by rotating the mirror provided in an optical path by the radiation pressure in accordance with intensity thereof and a highly reliable inhibitory control operation of light intensity can be performed at low prices while operating simply and passively, and eventually will be applicable to relatively small-scale optical devices and optical devices for general households.

(2) Since the coupling efficiency to the optical fiber, which is an output optical system, of a reflected signal light with regard to an input signal light as an incident light can be turned on and off by the first or second radiation pressure of the control light, an optical switch function can advantageously be realized with a simple structure and high reliability at low prices.

(3) Since, with the mirror position holding mechanism and either of triggers as radiation pressures of the first and second control lights, the mirror surface can be thrown into the first or second state and output of a reflected signal light with regard to two signal lights as incident lights can be switched to two states, an optical flip flop function can advantageously be realized with a simple structure and high reliability at low prices.

Brief Description of the Drawings

Fig. 1 is a diagram showing an optical controller according to a first embodiment of the present invention.
Fig. 2 is a diagram showing a structure of an MEMS mirror according to the first embodiment of the present invention.
Fig. 3 is a diagram showing a setting example of dimensions and property values of the optical system shown in FIGS. 1 and 2.
Fig. 4 is a diagram showing a relationship of a mirror rotation angle with regard to optical input intensity from a lens in the optical controller according to the first embodiment.
Fig. 5 is a diagram showing the relationship of the optical input intensity from an optical fiber to a mirror main body and optical output intensity from the mirror main body to the optical fiber in the optical controller according to the first embodiment.
Fig. 6 is a diagram showing an optical system serving as a model for illustrating that the angle on the reflecting surface of the mirror main body can be uniquely determined by a restoring force generated by a beam.

Figs. 7 and 8 are both diagrams for illustrating that the angle on the reflecting surface of the mirror main body can be uniquely determined by the restoring force generated by the beam.

Fig. 9 (a), Fig. 9 (b), and Figs. 10 (a) to 10 (c) are diagrams showing modified examples of the first embodiment of the present invention.

Fig. 11 is a block diagram showing an optical controller according to a second embodiment of the present invention.

Fig. 12 is ablock diagram showing anoptical controller according to a third embodiment of the present invention.

Fig. 13 is a diagram for illustrating an operation of the third embodiment of the present invention.

Best Mode for Carrying Out the Invention

Embodiments of the present invention will be described below with reference to drawings.

[A] Description of the first embodiment

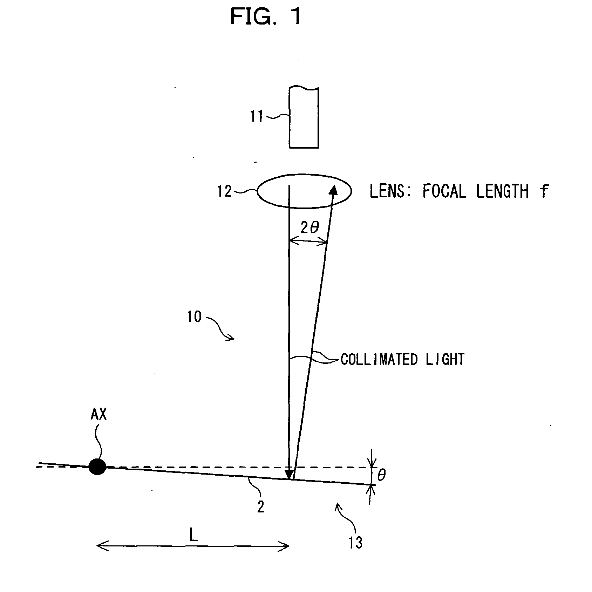

Fig. 1 is a diagram showing the optical controller according to the first embodiment of the present invention and, as shown in this Fig. 1, an optical controller 10 according to the first embodiment is provided in a first portion of an optical device and the like constituting an optical transmission device to prevent excessive optical input to the optical device and is comprised of an optical fiber 11 for both input/output, a lens 12, and an MEMS (Micro Electro Mechanical System) mirror 13 as a mirror device.

That is, as an optical system of the optical controller 10 shown in this Fig. 1, light from the optical fiber 11 is converted into a collimated light through the lens 12 to input to the mirror 13, and the optical fiber 11 and the lens 12 at this point constitute an input optical system that inputs an incident light at a predetermined angle.

Light reflected by the mirror 13 is incident on the optical fiber 11 again through the lens 12, and the lens 12 and the optical fiber 11 at this point constitute an output optical system on which the incident light reflected by the MEMS mirror 13, is incident as the output light.

The MEMS mirror 13 is a mirror device constructed so as to make a reflection angle of the collimated light incident from the lens 12 variable by moving a mirror surface rotationally around the rotation axis. That is, the reflecting surface of the MEMS mirror 13 is constructed to be rotatable and the MEMS mirror 13 is capable of making the collimated light from the lens 12 as an incident light to be supplied reflect at a predetermined position on the reflecting surface.

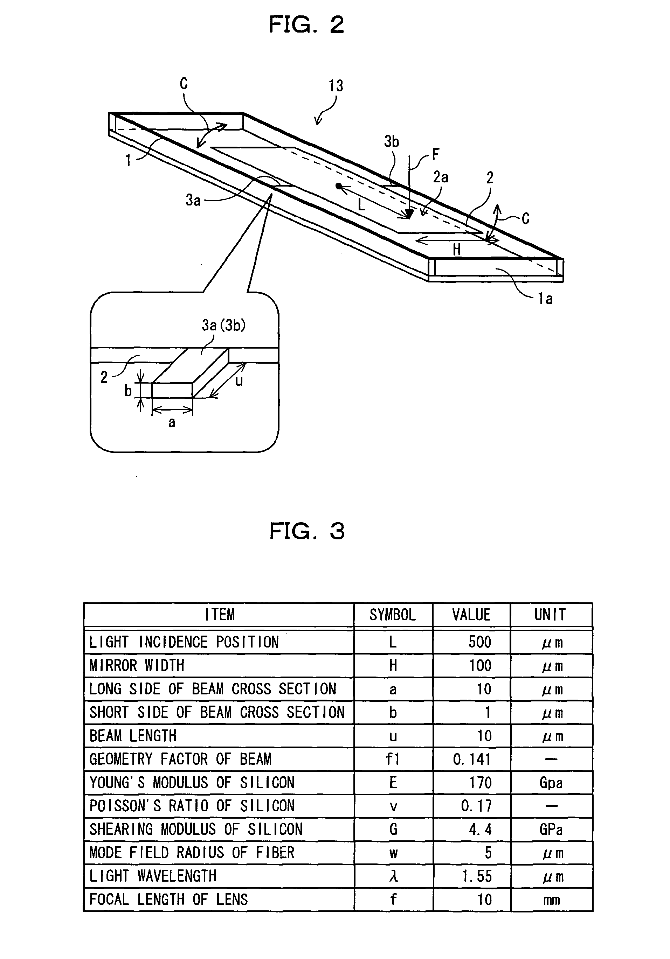

The MEMS mirror 13 is producible by using a production method and semiconductor process based on a general MEMS technology. More specifically, the MEMS mirror 13 comprises, as shown in Fig. 2, for example, a base frame 1 and a mirror main body 2 having, for example, a rectangle-shaped reflecting surface, and also beams 3a and 3b for supporting the mirror main body 2 on the base frame 1.

The beams 3a and 3b are used, for example, to connect and fix positions of both main body 2 ends that divide long sides of the rectangle of the mirror main body 2 into two and the base frame 1, and are constructed of elastic construction material such as silicon. Then, when these beams 3a and 3b are twisted, a reflecting surface 2a of the mirror main body 2 can rotationally be moved in a C direction in the diagram. Therefore, the beams 3a and 3b have a function as a torsion bar to support the rotation axis of the mirror main body 2.

Incidentally, the mirror main body 2 is supported with empty space relative to a base bottom 1a and this makes sure that the mirror main body 2 can be caused to rotate with flexibility within a predetermined angle range when the beams 3a and 3b are twisted.

As a torsion stress against a twist of the above-described beams 3a and 3b, a force so as to restore the twist of the beams 3a and 3b is generated. In other words, the beams 3a and 3b construct a restoring force generating mechanism that can generate a torsion stress as a restoring force for restoring the position of the mirror main body 2 to the original position thereof against the force to rotate the mirror main body 2.

Here, in the present embodiment, as described later, the mirror main body 2 can be caused to rotate by a radiation pressure F of light itself from the above lens 12. Then, in accordance with a magnitude of the radiation pressure F, the angle on the reflecting surface of the mirror main body 2 can uniquely be determined by the restoring force generated by the beams 3a and 3b as the restoring force generating mechanism.

In the above optical system shown in Figs. 1 and 2, dimensions and property values canbe determined, for example, as shown in Fig. 3. Concrete examples of these dimensions and property values are shown to make an understanding of the present invention easier and the present invention is not limited to these concrete examples of dimensions and property values.

Here, a light incidence position L in Figs. 1 to 3 is the position where light from the lens 12 reflects on the reflecting surface 2a of the mirror main body 2 and is represented by a distance "L" from a rotation axis AX by the beams 3a and 3b. Also, a mirror width "H" is a length of a short side of a rectangle in the diagrams of the mirror main body 2, "a" is the long side of a cross section of the beam 3a and beam 3b, "b" is the short side thereof, "u" is the length of the beams 3a and 3b, and "f" is a focal length of the lens. Other values in the diagrams in Fig. 3 will be described later.

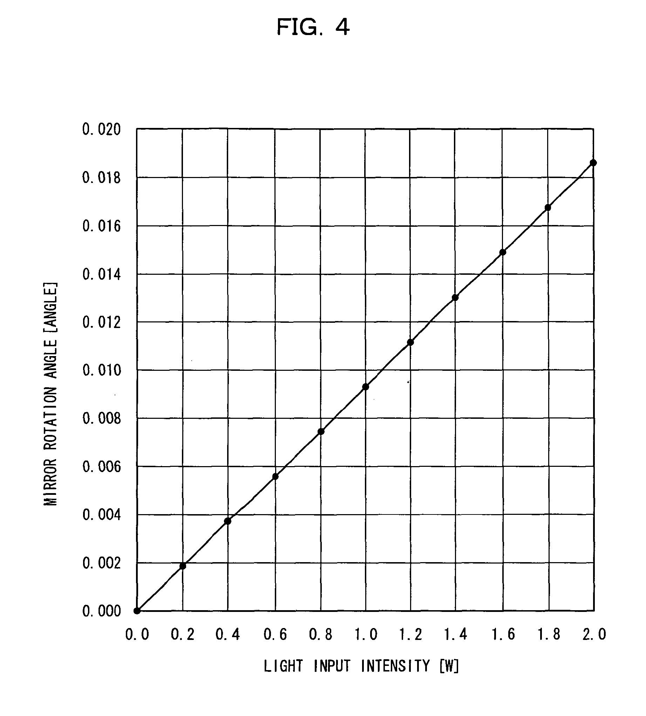

Incidentally, in the optical controller 10 having the above dimension settings shown in Fig. 3, a mirror rotation angle θ relative to the optical input intensity from the lens 12 is in a proportionality relation, as shown in Fig. 4. It is evident from Fig. 4 that when the optical input intensity from the optical fiber 11 to the mirror main body 2 is 1 watt (W), the mirror main body 2 rotates by 0.0093 degrees.

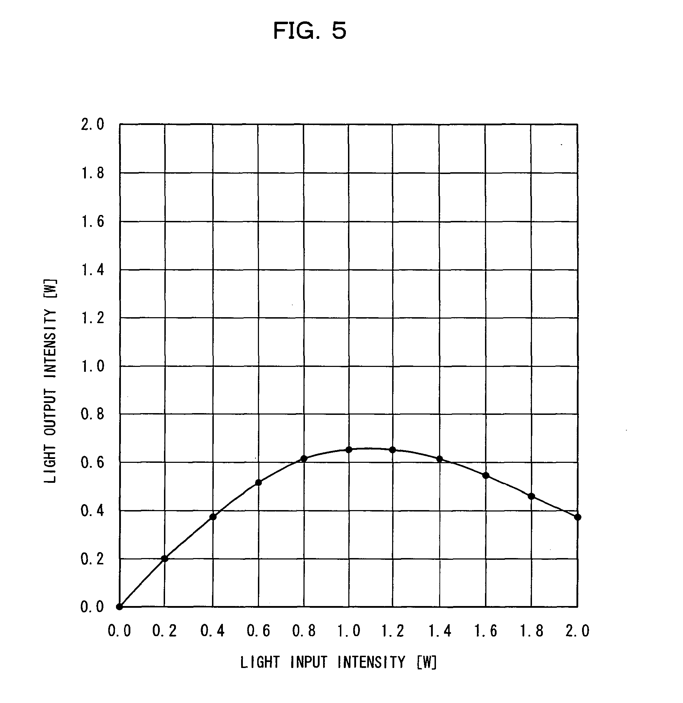

Then, since a proportion of light that returns to the optical fiber 11 through the lens 12 after being reflected by the mirror main body 2 changes with rotation of the mirror main body 2, a relation between the optical input intensity from the optical fiber 11 to the mirror main body 2 and the optical output intensity from the mirror main body 2 to the optical fiber 11 will change as shown in Fig. 5. That is, as shown in this Fig. 5, it is apparent that the optical output intensity takes a maximum value of about 0.7 W near the optical input intensity of about 1 W.

This makes it possible to inhibit the optical output intensity to about 0.7 W or below regardless of the optical input intensity. If the optical input intensity is about 0.4 W or below, the optical input intensity and optical output intensity are approximately equal and no excessive loss will arise when used in this optical input intensity range.

With the above structure, in the first embodiment of the present invention, light (incident light) input from the optical fiber 11 is reflected by the mirror main body 2 as a collimated light through the lens 12 and, in accordance with the radiation pressure of the collimated light itself as an incident light, the mirror main body 2 rotates by a predetermined angle. That is, since the reflection angle on the mirror main body 2 changes in accordance with the radiation pressure of the incident light, the proportion of the output light incident on the original optical fiber 11 will also change in accordance with the radiation pressure.

For example, if the incident light should be used as a signal light in which data is modulated, as the optical controller 10 according to the present invention, an optical controller to control light intensity that controls the intensity of an optical signal from the optical fiber 11 to a certain level or below can be constructed.

Next will be described in detail the fact that the angle on the reflecting surface of the mirror main body 2 can uniquely be determined by the restoring force generated by the beams 3a and 3b as the restoring force generating mechanism in accordance with the magnitude of the radiation pressure F will be described below in detail.

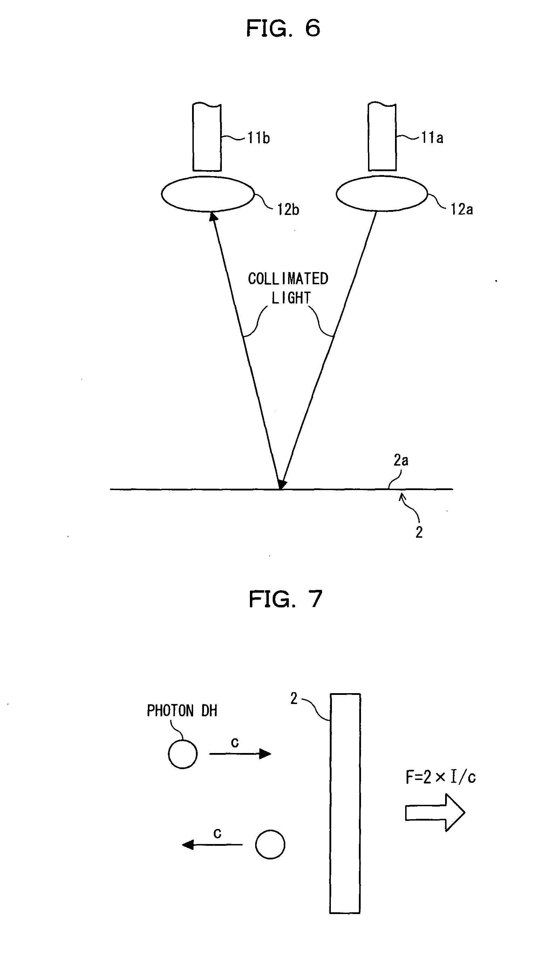

For convenience of description, as shown in Fig. 6, for example, an optical system is assumed in which an incident light is inputted from an optical fiber 11a, converted into a collimated light by a lens 12a, reflected by the mirror main body 2, which serves as an MEMS mirror, condensed by a lens 12b, which is different from the lens 12a, and incident on an output fiber 11b, which is different from the optical fiber 11a.

In this case, as shown in Fig. 7, a pressing force on the mirror main body 2, that is, a radiation pressure is generated when the light is reflected by a reflecting surface 2a of the mirror main body. Momentum p of a photon shown in Fig. 7 can be represented as shown in a formula (1) when a Planck's constant is h and a wavelength is λ:

$$p \ = \ h/\lambda \qquad\qquad\qquad (1)$$

Then, if the number of photons colliding against the mirror main body 2 per unit time is n, a force F acting on the mirror main body 2 can be represented as shown in the formula (2):

$$F \ = \ 2 \ X \ p \ X \ n \qquad\qquad\qquad (2)$$

The number n of photons can be represented as shown in the formula (3) assuming that the light intensity (energy per unit time) is I and the light speed is c:

$$n \ = \ I/(h \ X \ c/\lambda) \qquad\qquad\qquad (3)$$

Therefore, since the force F acting on the mirror main body can be represented as shown in the formula (4), the pressing force F on the mirror, that is, the radiation pressure increases in proportion to the light intensity I:

$$F \ = \ 2 \ X \ (h/\lambda) \ X \ (I/(h \ X \ c/\lambda)) \ = \ 2 \ X \ I/c \qquad (4)$$

Since, as shown in the above Fig. 2, the mirror main body 2 is connected to the fixed thin rectangular beams 3a and 3b, the mirror main body 2 can be rotated using the beams 3a and 3b as the rotation axis. Then, if the mirror main body 2 rotates, the beams 3a and 3b are twisted to generate a stress, generating a restoring force to restore the mirror main body 2 to the original position thereof. The rotation angle θ of the mirror main body 2 can be represented as shown in the formula (5) if the moment to rotate the mirror main body 2 is T, shearing modulus is G, the length of a beam is u, the long side of the cross section of a beam is a, the short side is b, and a coefficient representing a geometric form is f1:

$$\theta = (T/2) \ / \ (f1 \ X \ G \ X \ a \ X \ b^3) \ X \ u \qquad\qquad (5)$$

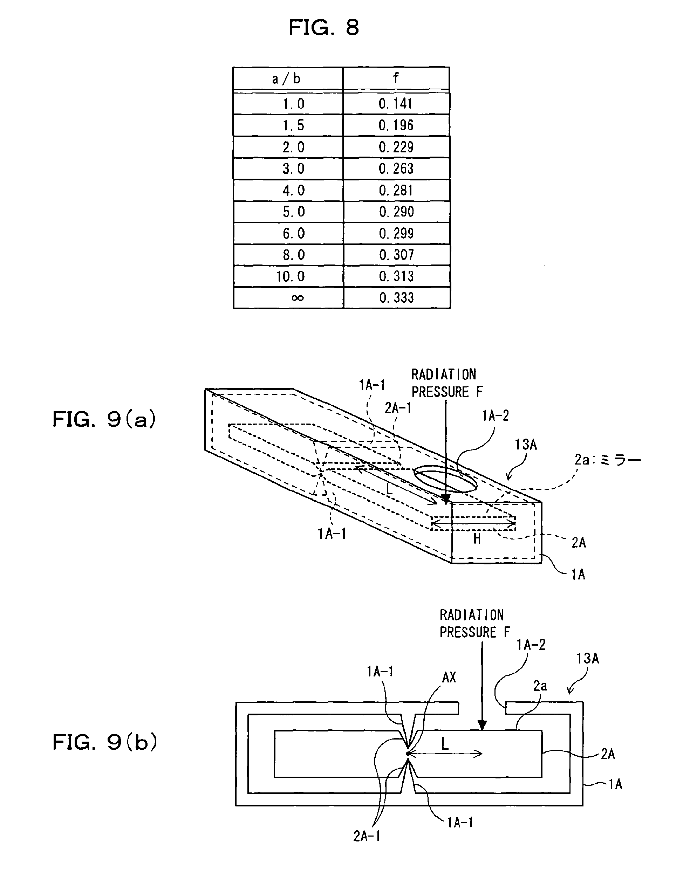

If the cross section of the beams 3a and 3b is rectangular, the value of f1 increases as a ratio a/b of two sides of the rectangle increases, and values shown in Fig. 8 are to be taken.

If light is incident on a position the distance L away from the rotation axis, that is, the beams 3a and 3b of the mirror main body, the moment T to rotate the mirror main body 2 can be represented as shown in the formula (6):

$$T = F \ X \ L \qquad\qquad (6)$$

Therefore, the rotation angle θ of the mirror main body 2 can be represented as shown in the formula (7). That is, the mirror main body 2 can be said to rotate in proportion to the light intensity I.

$$\theta = (F \ X \ L/2) \ / \ (f1 \ X \ G \ X \ a \ X \ b^3) \ X \ u$$

$$= (I/c) \ X \ L \ / \ (f \ X \ G \ X \ a \ X \ b^3) \ X \ u \qquad\qquad (7)$$

The cross section of the beams 3a and 3b has a rectangular shape in the present embodiment, but according to the present invention, adoption of other shapes is not precluded. That is, from the formula (7), the mirror main body 2 can be said to rotate in proportion to the light intensity I regardless of the shape of the cross section of the beams 3a and 3b.

As shown in Fig. 1, if the focal length of the lens is f, when the mirror main body 2 rotates by θ, a beam of light reentering the fiber rotates by φ = 2θ, shifting vertically to an optical axis by x = f X tan2θ. If a coupling of light inputted from the optical fiber 11 and that incident on the optical fiber 11 are considered to be a coupling of Gaussian beams, the coupling efficiency η of reflected light to the optical fiber 11 can be represented like the formula (8) if a mode field diameter of the fiber is 2w:

$$\eta = \exp \ [-\{x^2/w^2 + \pi^2 \phi^2/\lambda^2 \ X \ w^2\}] \qquad\qquad (8)$$

From the above relations, an incident light can change the coupling efficiency thereof by rotating the mirror main body 2 provided in an optical path by the radiation pressure in accordance with intensity thereof, and an optical controller can be realized that performs a highly reliable inhibitory control operation of light intensity at low prices while operating simply and passively.

Thus, since, according to the first embodiment of the present invention, the mirror device 13 is equipped with the mirror main body 2 and the beams 3a and 3b as the restoring force generating mechanism, the mirror device has advantages that an incident light can change the coupling efficiency thereof by rotating the mirror main body provided in an optical path by the radiation pressure in accordance with the intensity thereof and a highly reliable inhibitory control operation of light intensity can be performed at low prices while operating simply and passively, and eventually will be applicable to relatively small-scale optical devices and optical devices for general households.

[A1] Description of modified examples of the first embodiment

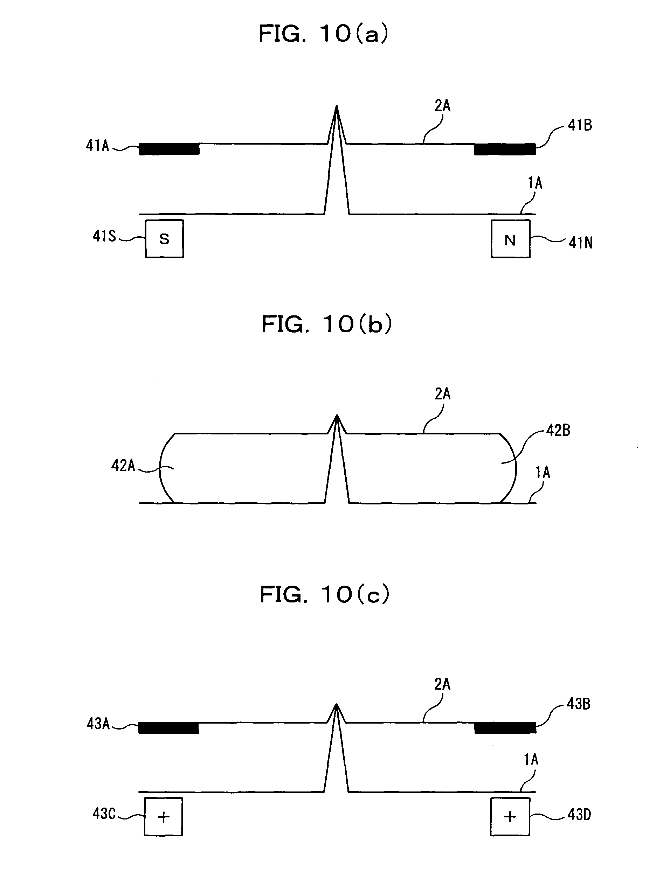

Fig. 9 (a), Fig. 9 (b), and Figs. 10 (a) - 10 (c) are diagrams showing modified examples of the first embodiment of the present invention. A restoring force of the mirror main body 2 was obtained from a torsion stress of the beams 3a and 3b in the above first embodiment, but the restoring force need not necessarily be derived from the torsion stress of the beams 3a and 3b, and an electrostatic force, magnetic force, surface tension or the like can also be used for an active operation.

Consequently, the mirror main body 2 need not necessarily have a structure shown in Fig. 2 in which it is fixed to the base frame 1 and supported by the beams 3a and 3b and can have, for example, a structure shown in Fig. 9 (a) and Fig. 9 (b) in which the mirror main body 2 can freely rotate. Fig. 9 (a) is a perspective view showing a mirror device 13A as a modified example of the first embodiment and Fig. 9 (b) is a diagram viewed in an A direction of the mirror device 13A shown in Fig. 9 (a).

Here, the mirror device 13A shown in Fig. 9 (a) and Fig. 9 (b) is comprised of a mirror main body 2A in which a groove 2A-1 is provided along a rotation axis AX on the reflecting surface and a reflecting rear surface (upper and lower surfaces) and a base frame 1A that supports the mirror main body 2A by sandwiching the mirror main body 2A between protruding portions 1A-1 and 1A-2 along the groove 2A-1 on the upper and lower surfaces. This makes it possible to freely rotate the mirror main body 2A around the rotation axis AX within the base frame 1A.

The base frame 1A has an opening 1A-2 to cause the reflecting surface 2a of the mirror main body 2A to reflect an incident light from the lens 12 and to lead a reflected return light thereof to the lens 12. The opening 1A-2 has a size so large that the reflected return light whose optical path has shifted due to rotation of the mirror main body 2A caused by a radiation pressure of the incident light can also be led to the lens 12.

Then, as shown in Figs. 10 (a) to 10 (c), for example, by arranging to make use of the magnetic force, surface tension of a liquid, or electrostatic force in the same manner as the torsion stress of the beams 3a and 3b in the above first embodiment as the restoring force, operation effects similar to those of the mirror device 13 in the first embodiment can be obtained. In Figs. 10 (a) to 10 (c), illustrations of the mirror main body 2A and base frame 1A are completely omitted while focusing on the structure of the restoring force generating mechanism.

The restoring force generating mechanism shown in Fig. 10 (a) is comprised of magnetic substances 41A and 41B provided at symmetrical positions with respect to the rotation axis AX on the reflecting rear surface of the mirror main body 2A and a south-pole magnet 41S and a north-pole magnet 41N provided at positions opposite to the above two magnetic substances 41A and 41B on the rear side of a base frame bottom. In other words, the south-pole magnet 41S and the north-pole magnet 41N are provided insulated on the rear side of the reflecting surface of the mirror main body 2A and a restoring force can be generated by a magnetic force on the mirror main body 2A obtained through these magnets 41S and 41N.

That is, when an incident light is caused to enter the mirror main body 2A, a force to cause the mirror main body 2A to rotate is generated by a radiation pressure of the incident light, and at this time, a magnetic force generated between the magnet 41S and the magnetic substance 41A, a magnetic force generated between the magnet 41N and the magnetic substance 41B, and a radiation pressure caused by the incident light can balance the angle of the mirror main body 2A at a predetermined angle.

In other words, by action of the magnetic forces caused by the magnets 41S and 41N, an angle position (mirror surface position) of the mirror main body 2A can uniquely be determined in accordance with the magnitude of the radiation pressure.

Therefore, the above magnets 41S and 41N and the magnetic substances 41A and 41B comprise a magnetic force providing mechanism (as a restoring force generating mechanism) to provide the magnetic force, which serves as the restoring force, to the mirror main body 2A.

The restoring force generating mechanism shown in Fig. 10 (b) is comprised of space in which liquids 42A and 42B are filled between the reflecting rear surface of the mirror main body 2A and the base frame 1A and a restoring force can be generated by a surface tension with respect to the mirror main body 2A obtained through these liquids 42A and 42B.

That is, when an incident light is caused to enter the mirror main body 2A, a force to cause the mirror main body 2A to rotate is generated by a radiation pressure of the incident light, and at this time, a surface tension generated the liquid 42A, a surface tension generated the liquid 42B, and a radiation pressure caused by the incident light can balance the angle of the mirror main body 2A at a predetermined angle.

In other words, by action of the surface tensions caused by the liquids 42A and 42B, the angle position (mirror surface position) of the mirror main body 2A can uniquely be determined in accordance with the magnitude of the radiation pressure.

Therefore, the above liquids 42A and 42B comprise a surface tension providing mechanism (as a restoring force generating mechanism) to provide the surface tension, which serves as the restoring force, to the mirror main body 2A.

Furthermore, the restoring force generating mechanism shown in Fig. 10 (c) is comprised of electrodes 43A and 43B provided at symmetrical positions with respect to the rotation axis AX on the reflecting rear surface of the mirror main body 2A and electrodes 43C and 43D for voltage application provided at positions opposite to the above two electrodes 43A and 43B on the rear side of a base surface. In other words, the electrodes 43C and 43D are provided insulated on the rear side of the reflecting surface of the mirror main body 2A and a restoring force can be generated by an electrostatic force on the mirror main body 2A obtained through application of a positive potential to these electrodes 43C and 43D.

That is, when an incident light is caused to enter the mirror main body 2A, a force to cause the mirror main body 2A to rotate is generated by a radiation pressure of the incident light, and at this time, an electrostatic force generated the electrodes 43C and 43A, an electrostatic force generated the electrodes 43D and 43B, and a radiation pressure caused by the incident light can balance the angle of the mirror main body 2A at a predetermined angle.

In other words, by action of the electrostatic force caused by application of a positive potential to the electrodes 43C and 43D, the angle position (mirror position) of the mirror main body 2A can uniquely be determined in accordance with the magnitude of the radiation pressure.

Therefore, the above electrodes 43A to 43D comprise an electrostatic force providing mechanism (as a restoring force generating mechanism) to provide the electrostatic force, which serves as the restoring force, to the mirror main body 2A.

Incidentally, structures for generating a magnetic force, surface tension, or electrostatic force as a restoring force are not limited to the above embodiments shown in FIGS. 10 (a) to 10 (c).

[B] Description of the second embodiment

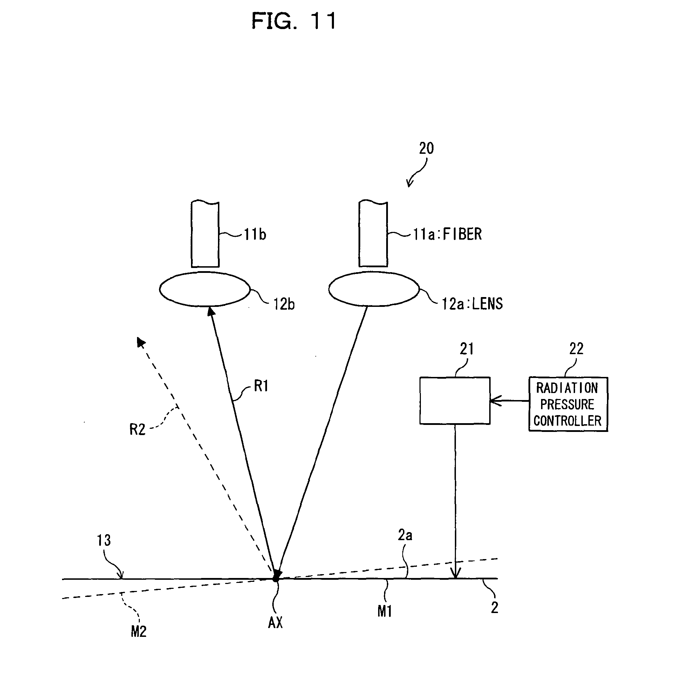

Fig. 11 is ablock diagram showing an optical controller 20 according to the second embodiment of the present invention, and the optical controller 20 shown in Fig. 11 is different from the above-described optical controller according to the first embodiment (See No. 10) in that light incident on the mirror main body 2 are a signal light and a control light and an on/off control operation of output of the signal light is performed by controlling the radiation pressure of the control light.

The optical controller 20 shown in Fig. 11 comprises the input side optical fiber 11a that inputs the signal light, the lens 12a that converts the signal light inputted by the optical fiber 11a into a collimated light, the MEMS mirror 13 that is identical to the above mirror in the first embodiment, the lens 12b that leads a reflected signal light reflected by the mirror main body 2 that forms the MEMS mirror 13 to the optical fiber 11b, and the output side optical fiber 11b that the reflected signal light from the lens 12b is caused to enter, and also a control light source 21 and a radiation pressure controller 22 that are characteristic of the present embodiment.

That is, also in the second embodiment, the MEMS mirror 13 is equipped with the restoring force generating mechanism like that in the first embodiment and the angle can uniquely be determined in accordance with the radiation pressure of the control light. In addition to the torsion stress described above in the first embodiment, the magnetic force, surface tension, and electrostatic force like the modified examples of the first embodiment canbe used for the restoring force generating mechanism.

Incidentally, the optical fiber 11a and the lens 12a constitute an input optical system that inputs an incident light at a predetermined angle and the lens 12b and the optical fiber 11b constitute an output optical system that causes the incident light reflected by the mirror main body 2 to enter as an output light.

The control light source 21 outputs a control light toward the mirror main body 2. That is, the control light source 21 outputs a control light for setting the mirror position of the mirror main body 2 by a radiation pressure thereof and an on/off control operation is performed by the radiation pressure controller 22.

That is, the radiation pressure controller 22 controls the radiation pressure of the control light by controlling the intensity of the control light to be output from the control light source 21. More specifically, the control light intensity is controlled by a first intensity or a second intensity, which are different from each other, and the angle on the reflecting surface of the mirror main body 2 is set to a first angle and the coupling efficiency of the output light reflected by the mirror main body 2 to the optical fiber 11b, which is an output optical system, is turned on by a first radiation pressure by the control light controlled by the first intensity and the angle on the reflecting surface of the mirror main body 2 is set to a second angle and the coupling efficiency of output light reflected by the mirror main body 2 to the optical fiber 11b, which is an output optical system, is turned off by a second radiation pressure by the control light controlled by the second intensity.

For example, a control light is output as the first intensity when the radiation pressure controller 22 controls the control light source 21 to turn it on and no control light is output as the second intensity when the radiation pressure controller 22 controls the control light source 21 to turn it off.

Incidentally, in the second embodiment, since a signal light from the lens 12a is to be incident on the rotation axis AX on the reflecting surface 2a, the mirror position does not change due to a radiation pressure of the signal light.

With the above structure, in the second embodiment of the present invention, when a control light is output from the control light source 21 (ON control), the angle of the mirror main body 2 is given by M1 and an angle (first angle), and thus a reflected light of the signal light from the lens 12a with respect to the mirror main body 2 is led, as a reflected signal light R1, to the optical fiber 11b through the lens 12b (ON state of the output signal light) .

On the other hand, when no control light is output from the control light source 21 (OFF control), the angle of the mirror main body 2 is given by M2 and an angle (second angle), and thus no reflected light of the signal light from the lens 12a with respect to the mirror main body 2 is led, as a reflected signal light R2, to the optical fiber 11b through the lens 12b (OFF state of the output signal light).

Thus, since, according to the second embodiment of the present invention, the coupling efficiency to the optical fiber 11b, which is an output optical system, of the reflected signal light with regard to the input signal light as an incident light can be turned on and off by the radiation pressure of the control light, the optical switch function can advantageously be realized with a simple structure and high reliability at low prices.

In the above-described second embodiment, the reflecting surface angle of the mirror main body 2 is set and an on/off control operation of the coupling efficiency to the output fiber 11b of the reflected signal light with regard to the input signal light is performed by the radiation pressure of the control light from a single control light source, but according to the present invention, a structure in which two control light sources are provided and when one light source is ON, the other is always OFF can easily be constructed by arranging optical fibers and lenses appropriately.

The radiation pressure controller 22 controls the radiation pressure of the control light by performing an ON control operation or an OFF control operation of the control light source 21, but according to the present invention, the present embodiment is not limited to this mode and if at least the ON/OFF control operation of the signal light can be performed, the control light of the control light source 21 is not necessarily limited to the ON/OFF control.

[C] Description of the third embodiment

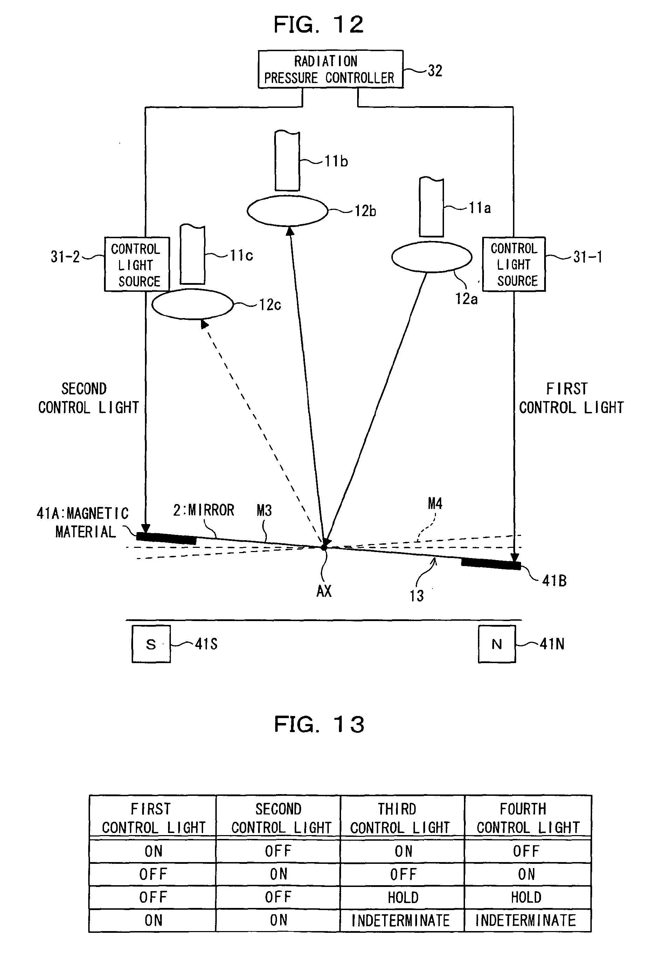

Fig. 12 is a diagram showing an optical controller 30 according to the third embodiment of the present invention, and the optical controller 30 shown in Fig. 12 is different from the above-described optical controller according to the second embodiment (See No. 20) in that the light incident on the mirror main body 2 includes two signal lights (a first signal light and a second signal light) and two control lights (a first control light and a second control light) and an optical flip flop circuit is constructed to switch output states of the two signal lights by radiation pressure control of these two control lights and mirror holding action described later.

The optical controller 30 shown in Fig. 12 comprises the input side optical fiber 11a that inputs two signal lights as an input optical system, a first output optical system comprising the lens 12a that converts the signal lights inputted from the optical fiber 11a into a collimated light, the MEMS mirror like the above-described first and second embodiments, and the lens 12b and the optical fiber 11b as an output optical system, and a second output optical system comprising a lens 12c and an optical fiber 11c.

In addition, the optical controller 30 comprises two control light sources 31-1 and 31-2 and a radiation pressure controller 32 that have the same functions as those (Nos. 21 and 22) described above in the second embodiment, and magnetic substances 41A and 41B and magnets 41S and 41N as a mirror holding mechanism, which is characteristic of the third embodiment.

That is, the MEMS mirror 13 has, also in the third embodiment, a restoring force generating mechanism like the above-described first embodiment, but with the mirror holding mechanism described later, the angle changes in accordance with the radiation pressure of the two control lights from the control light sources 31-1 and 31-2 and the mirror position can be held unchanged even if there is no control light incident on the reflecting surface 2a.

The control light sources 31-1 and 31-2 output control lights that provide a radiation pressure to the mirror main body 2 forming the MEMS mirror 13, and they are arranged so that the first control light from the control light source 31-1 and the second control light from the control light source 31-2 are caused to be incident on two locations (for example, symmetrical with respect to the rotation axis) sandwiching the rotation axis AX on the reflecting surface 2a of the mirror main body 2.

Moreover, like the above-described case of Fig. 10 (a), the magnetic substances 41A and 41B are applied at edges on the reflecting rear surface of the mirror main body 2 and the south pole magnet 41S and the north pole magnet 41N are together constructed at locations opposite to the above two magnetic substances 41A and 41B on the rear side of the base frame bottom so that the magnetic substances 41A and 41B attract the magnets 41S and 41N to each other respectively.

Then, by making magnetic forces with which these magnets 41S and 41N attract the magnetic substances 41A and 41B larger than torsion stresses of the beams 3a and 3b as the above described restoring force generating mechanism, the mirror main body 2 can be held in either of two states in which the rotation angle thereof becomes maximum (state M3 or M4 in Fig. 12).

In other words, even if neither the first nor the second control light is input from the control light sources 31-1 and 31-2, the above magnetic substances 41A and 41B and magnets 41S and 41N have a function as a mirror position holding mechanism to hold the mirror position.

Then, the radiation pressure controller 32 controls the radiation pressure of the first and second control lights by controlling intensity of the first and second control lights to be output from the control light sources 31-1 and 31-2.

More specifically, by performing an ON control operation of the first control light from the control light source 31-1 and an OFF control operation of the second control light from the control light source 31-2, the surface of the mirror main body 2 can be held in a first state (for example, the surface state M3 in Fig. 12) using the radiation pressure by the first control light as a trigger. Also, by performing an ON control operation of the second control light from the control light source 31-2 and an OFF control operation of the first control light from the control light source 31-1, the surface of the mirror main body 2 can be held in a second state (for example, the surface state M4 in Fig. 12) using a radiation pressure by the second control light as a trigger.

With the above structure, in the third embodiment of the present invention, the radiation pressure by the first and second control lights is controlled by the radiation pressure controller 32 and the surface of the mirror main body 2 is held in the M3 state using, for example, the radiation pressure by the first control light as a trigger, while the surface of the mirror main body 2 can be held in the M4 state using, for example, the radiation pressure by the second control light as a trigger.

If, at this point, the first or the second control light is turned off, by action of magnetic forces from the magnetic substances 41A and 41B and magnets 41S and 41N as a mirror position holding mechanism, the state of the mirror surface is held in the M3 or M4 state.

If, by using such switching operations of the mirror surface, as shown in Fig. 13, for example, the mirror surface is thrown into the M3 state by turning on the first control light and turning off the second control light, two signal lights are led to the optical fiber 11b of the first output optical system. At this point, a setting can be made as an optical flip flop so that the first signal light is turned on and the second signal light is turned off.

Similarly, if the mirror surface is thrown into the M4 state by turning off the first control light and turning on the second control light, two signal lights are led to the optical fiber 11c of the second output optical system. At this point, a setting can be made as an optical flip flop so that the first signal light is turned off and the second signal light is turned on.

As described above, if an ON control operation of the first or the second control light is performed, and then both control lights become off, the surface of the mirror main body 2 can hold the state immediately before. Consequently, on/off settings of two signal lights can also be caused to hold the state immediately before.

Thus, since, according to the third embodiment of the present invention, output of the reflected signal light with regard to two signal lights as incident lights can be switched to two states using the magnetic substances 41A and 41B and magnets 41S and 41N as a mirror position holding mechanism and either of triggers as radiation pressures of two control lights, the optical flip flop function can advantageously be realized with a simple structure and high reliability at low prices.

In the above-described present embodiment, torsion stresses of the beams 3a and 3b are used as a restoring force generating mechanism and magnetic forces by the magnetic substances 41A and 41B and magnets 41S and 41N are used as a mirror position holding mechanism, but according to the present invention, the present embodiment is not limited to this and by appropriately combining two of the torsion stress, electrostatic force, magnetic force, and surface tension, an optical flip flop similar to the above optical flip flop in the third embodiment can be constructed.

When the radiation pressure controller 32 performs an ON operation of either of the control light sources 31-1 and 31-2, the other is always controlled to OFF, but according to the present invention, the present embodiment is not limited to this mode and another mode may be used to control the control light sources 31-1 and 31-2 if the mode acts at least as a trigger to cause the surface of the mirror main body 2 to hold in either of M3 and M4.

[D] Others

Regardless of the above-described embodiments, the present invention can be carried out in various forms without departing from the spirit of essential characteristics thereof.

If an embodiment of the present invention is disclosed, a person skilled in the art can produce it.

Industrial Applicability

As described above, mirror devices and optical controllers of the present invention are useful for optical communication systems and are suitable for, in addition to prevention of particularly input of excessive light, execution of optical switching and optical flip flop functions.

**Claims**

1.  A mirror device, comprising:

    a mirror whose reflecting surface is constructed to be rotatable and is rotated by a radiation pressure of an incident light that is supplied; and

a restoring force generating mechanism that can generate a restoring force attempting to restore the mirror that has been rotated by the radiation pressure of the incident light to an original position thereof.

2. The mirror device according to claim 1, wherein the mirror device is constructed so that the incident light that provides the radiation pressure to the mirror is a signal light.

3. The mirror device according to claim 1, wherein the mirror device is constructed so that the incident light that provides the radiation pressure to the mirror is a control light and the signal light is caused to reflect at a rotation axis position on the reflecting surface of the mirror.

4. The mirror device according to claim 3, wherein the mirror device is constructed so that the control light includes a first and a second control light incident on two locations sandwiching the rotation axis on the reflecting surface of the mirror respectively and
a mirror position holding mechanism is provided to hold a mirror position even if neither of said first nor second control light is input.

5. The mirror device according to any one of claim 1 to claim 4, wherein the restoring force generating mechanism is equipped with a torsion bar to support the rotation axis of the mirror and is constructed so that a torsion stress of the torsion bar should become said restoring force.

6. The mirror device according to any one of claim 1 to claim 4, wherein the restoring force generating mechanism is comprised of an electrostatic force providing mechanism that provides an electrostatic force, which becomes said restoring force, to the mirror.

7. The mirror device according to claim 6, wherein the electrostatic force providing mechanism is equipped with electrodes disposed insulated on a rear side of the reflecting surface of the mirror and is constructed so that said restoring force should be generated by the electrostatic force provided to the mirror through a voltage applied to the electrodes.

8. The mirror device according to claim 1, wherein the restoring force generating mechanism is comprised of a magnetic force providing mechanism that provides a magnetic force, which becomes said restoring force, to the mirror.

9. The mirror device according to claim 8, wherein the magnetic force providing mechanism is equipped with magnets disposed insulated on the rear side of the reflecting surface of the mirror and is constructed so that said restoring force should be generated by the magnetic force obtained through the magnets.

10. The mirror device according to claim 1, wherein the restoring force generating mechanism is comprised of a surface tension providing mechanism that provides surface tension, which becomes said restoring force, to the mirror.

11. An optical controller comprising:

an input light optical system that radiates an input light at a predetermined angle;
a mirror device that reflects said input light from the input light optical system; and
an output light optical system on which said input light reflected by the mirror device is incident as output light; wherein
the mirror device comprises;
themirrorwhose reflecting surface reflects the input light supplied to the reflecting surface is constructed to be rotatable, and
a restoring force generating mechanism that generates the restoring force attempting to restore the mirror to an original position thereof against a force attempting to rotate the mirror,
wherein the predetermined angle on said reflecting surface is formed by the restoring force generated by the restoring force generating mechanism and
a coupling efficiency of the output light reflected by the mirror to the output optical system is controlled so that the predetermined angle is formed on said reflecting surface.

12. An optical controller comprising:

an incident light optical system that inputs an incident light at a predetermined angle;
a mirror device that reflects said incident light from the incident light optical system;

an output light optical system on which said incident light reflected by the mirror device is incident as output light;

a control light source that inputs control light toward the mirror device,

wherein

the mirror device comprises;

the mirror whose reflecting surface reflects the incident light supplied to the reflecting surface is constructed to be rotatable, and

a restoring force generating mechanism that generates the restoring force attempting to restore the mirror to an original position thereof against a force attempting to rotate the mirror,

the input optical system is disposed so that said incident light is reflected on a rotation axis for the rotation in the mirror device,

wherein the predetermined angle on said reflecting surface is formed by the restoring force generated by the restoring force generating mechanism and the angle on said reflecting surface is controlled so that the coupling efficiency of the output light reflected by the mirror to the output optical system is reached.

13. The optical controller according to claim 12, wherein the optical controller comprises a radiation pressure controller that controls radiation pressure of the control light by controlling intensity of said control light.

14. The optical controller according to claim 13, wherein

the radiation pressure controller controls said control light intensity by a first or a second intensity, which are different from each other,

the angle on the reflecting surface of the mirror is set to a first angle by a first radiation pressure by the control light controlled by the first intensity to turn on the coupling efficiency of the output light reflected by the mirror to the output optical system, and

the angle on the reflecting surface of the mirror is set to a second angle by a second radiation pressure by the control light controlled by the second intensity to turn off the coupling efficiency of the output light reflected by the mirror to the output optical system.

15. The optical controller according to claim 13, wherein

the control light that provides the radiation pres sure to the mirror includes a first and a second control light incident on two locations sandwiching the rotation axis on the reflecting surface of the mirror respectively,

the mirror position holding mechanism is provided to hold the mirror position even if neither of said first nor second control light is input, and

by controlling the radiation pressure by said first and second control light, the radiation pressure controller holds the mirror surface in a first state using the radiation pressure of any one of the first and second control light as a trigger, while holding the mirror surface in a second state using the radiation pressure of another of the first and second control light as a trigger.

16. A mirror device, comprising:

the mirror whose reflecting surface is constructed to be rotatable and is rotated by the radiation pressure of the incident light that is supplied; and

means for generating a force to rotate the mirror independently of the mirror rotation by the incident light.

17. A control method of a mirror, wherein the mirror is rotated by the radiation pressure of the light incident on the mirror whose reflecting surface is constructed to be rotatable and

the mirror that has been rotated by the input light is rotated to a predetermined position.

18. A mirror element, comprising:

a reflecting surface;

a rotation axis to rotate the reflecting surface; and

a supporter for supporting the rotation axis, wherein

the rotation axis and the supporter are constructed to be rotatable by a radiation pressure of a light inputted on the reflecting surface.

# FIG. 1

11

12 LENS: FOCAL LENGTH $f$

$2\theta$

10

COLLIMATED LIGHT

AX

$\theta$

2

L

13

14

# FIG. 2

# FIG. 3

| ITEM | SYMBOL | VALUE | UNIT |
|---|---|---|---|
| LIGHT INCIDENCE POSITION | L | 500 | $\mu m$ |
| MIRROR WIDTH | H | 100 | $\mu m$ |
| LONG SIDE OF BEAM CROSS SECTION | a | 10 | $\mu m$ |
| SHORT SIDE OF BEAM CROSS SECTION | b | 1 | $\mu m$ |
| BEAM LENGTH | u | 10 | $\mu m$ |
| GEOMETRY FACTOR OF BEAM | f1 | 0.141 | — |
| YOUNG'S MODULUS OF SILICON | E | 170 | Gpa |
| POISSON'S RATIO OF SILICON | ν | 0.17 | — |
| SHEARING MODULUS OF SILICON | G | 4.4 | GPa |
| MODE FIELD RADIUS OF FIBER | w | 5 | $\mu m$ |
| LIGHT WAVELENGTH | λ | 1.55 | $\mu m$ |
| FOCAL LENGTH OF LENS | f | 10 | mm |

FIG. 4

## FIG. 5

# FIG. 6

COLLIMATED
LIGHT

# FIG. 7

PHOTON DH

$F=2 \times I/c$

## FIG. 8

| a / b | f |
|-------|-------|
| 1. 0 | 0. 141 |
| 1. 5 | 0. 196 |
| 2. 0 | 0. 229 |
| 3. 0 | 0. 263 |
| 4. 0 | 0. 281 |
| 5. 0 | 0. 290 |
| 6. 0 | 0. 299 |
| 8. 0 | 0. 307 |
| 10. 0 | 0. 313 |
| ∞ | 0. 333 |

FIG. 9(a)

FIG. 9(b)

# FIG. 10(a)

2A

41B

41A

1A

41S　S　　　　　　　　N　41N

# FIG. 10(b)

2A

42B

42A

1A

# FIG. 10(c)

2A

43B

43A

1A

43C　+　　　　　　　+　43D

## FIG. 11

## FIG. 12

## FIG. 13

| FIRST CONTROL LIGHT | SECOND CONTROL LIGHT | THIRD CONTROL LIGHT | FOURTH CONTROL LIGHT |
|---|---|---|---|
| ON | OFF | ON | OFF |
| OFF | ON | OFF | ON |
| OFF | OFF | HOLD | HOLD |
| ON | ON | INDETERMINATE | INDETERMINATE |

<table>
<tr><td colspan="2" align="center"><b>INTERNATIONAL SEARCH REPORT</b></td><td colspan="2">International application No.<br>PCT/JP2004/003020</td></tr>
</table>

**A. CLASSIFICATION OF SUBJECT MATTER**
Int.Cl⁷ G02B26/02, G02B26/08

According to International Patent Classification (IPC) or to both national classification and IPC

**B. FIELDS SEARCHED**

Minimum documentation searched (classification system followed by classification symbols)
Int.Cl⁷ G02B26/02, G02B26/08

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
JSTplus

**C. DOCUMENTS CONSIDERED TO BE RELEVANT**

| Category* | Citation of document, with indication, where appropriate, of the relevant passages | Relevant to claim No. |
|---|---|---|
| X | JP 8-87328 A (Research Development Corp. of Japan),<br>02 April, 1996 (02.04.96),<br>Par. No. [0019]; Fig. 1<br>(Family: none) | 1,17,18 |
| X<br>Y | JP 2003-43381 A (Mitsubishi Electric Corp.),<br>13 February, 2003 (13.02.03),<br>Par. No. [0016]; Fig. 8<br>(Family: none) | 11<br>1,3-10,12-18 |
| Y | JP 2002-250873 A (NEC Corp.),<br>06 September, 2002 (06.09.02),<br>Par. Nos. [0007] to [0010]<br>& CA 2365804 A1 | 1,3-10,<br>12-18 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>02 April, 2004 (02.04.04) | Date of mailing of the international search report<br>20 April, 2004 (20.04.04) |
|---|---|
| Name and mailing address of the ISA/<br>Japanese Patent Office | Authorized officer |
| Facsimile No. | Telephone No. |

Form PCT/ISA/210 (second sheet) (January 2004)

| INTERNATIONAL SEARCH REPORT | International application No. |
|---|---|
| | PCT/JP2004/003020 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-302585 A (The Nippon Signal Co., Ltd.), 24 October, 2003 (24.10.03), Par. No. [0007] (Family: none) | 4,15 |
| Y. | EP 332953 A2 (TEXAS INSTRUMENTS INC.), 20 September, 1989 (20.09.89), Page 8, lines 10 to 22; Fig. 2 & JP 4-230723 A | 6,7 |
| Y | JP 60-186423 U (Sankyo Seiki Mfg.Co., Ltd.), 10 December, 1985 (10.12.85), Page 4, lines 7 to 11 (Family: none) | 8,9 |
| Y | JP 2003-215491 A (Sumitomo Metal Mining Co., Ltd.), 30 July, 2003 (30.07.03), Par. Nos. [0048] to [0056]; Figs. 4 to 6 (Family: none) | 10 |
| A | US 6178284 B1 (Lucent Technologies Inc.), 23 January, 2001 (23.01.01), Figs. 10 to 14 (Family: none) | 2 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI7202848 A
- JP 2000146654 A
- JP 2002087574 A

**Non-patent literature cited in the description**

- Fuse also for an optical transmission system for suppressing excessive power. **TOM MARRAPODE.** Nikkei Electronics. Nikkei Business Publications Inc, 24 November 2003, 145-148